# EUROPEAN PATENT APPLICATION

(11) **EP 3 646 732 A1**
(43) Date of publication of application: **06.05.2020**
(21) Application number: 18204169.9
(22) Date of filing: 02.11.2018
(51) Int. Cl.: A21D 8/02, A21C 14/00, A21D 6/00

(54) **DOUGH RELAXATION**

(71) Applicant: Technische Universität München, 80333 München (DE)
(72) Inventor: Becker, Thomas, 85111 Adelschlag (DE); Jekle, Mario, 85356 Freising (DE); Brandner, Silvia, 85354 Freising (DE)
(74) Representative: Koplin, Moritz

(57) **Abstract**

Provided is a process of reducing a time required for processing dough 16 which is provided for producing baked goods by speeding-up dough relaxation.

## Description

### FIELD

The present disclosure relates to reducing the time required for dough processing by speeding-up dough relaxation.

### BACKGROUND

When handling dough for producing baked goods, the dough requires periods of rest between process steps in which mechanical force is exerted on the dough. The periods of rest cause dough relaxation, as the conformation of the dough proteins undergoes a change which decreases the resistance of the dough against deformation.

### SUMMARY

The present invention provides a method of reducing a time required for processing dough provided for producing baked goods by speeding-up dough relaxation and a system employing said method.

The method comprises decreasing the resistance of the dough against deformation after or during a step of exerting mechanical force on the dough by applying an alternating electromagnetic field or by supplying a voltage or a current to the dough. Preferably, an alternating voltage or an alternating current is supplied to the dough.

In this regard, the term "dough", as used throughout the description and the claims, particularly refers to a mixture comprising water and gluten (e.g., wheat flour). Moreover, the formulation "resistance of the dough against deformation", as used throughout the description and the claims, particularly refers to the elastic properties of the dough.

The method may further comprise exerting mechanical force on the dough or baking the dough after applying the alternating electromagnetic field or supplying the voltage or the current to the dough.

The step of exerting mechanical force on the dough may comprise at least one of kneading, shaping and dividing the dough. In this regard, the term "shaping", as used throughout the description and the claims, includes laminating the dough.

The dough may rest less than 10 minutes, preferably less than 5 minutes, and more preferably less than 1 minute between steps of exerting mechanical force on the dough or between exerting mechanical force on the dough and baking.

The alternating electromagnetic field may have an amplitude in a range of 0,8kV/m to 3 kV/m. The voltage may be between 80 V and 300 V or the current may be between 0,5 A and 5,2 A.

The alternating electromagnetic field or the voltage or the current may be applied to the dough for a period of less than 30 s, preferably of less than 15 s, and more preferably of less than 5 s.

The alternating electromagnetic field or the voltage or the current may be provided by two electrodes that are in mechanical contact with the dough.

The extensibility of the dough may be decreased by the step of exerting mechanical force on the dough by a value A and increased by the step of applying an alternating electromagnetic field or by supplying a voltage or a current to the dough by a value B, wherein B is more than 50 %, preferably more than 75 %, and more preferably more than 90 % of A.

The dough may comprise gluten.

The system comprises a dough relaxation device having two electrodes, wherein the dough relaxation device is configured to decrease the resistance of the dough against deformation by applying an alternating electromagnetic field or by supplying a voltage or a current to the dough. Preferably, the dough relaxation device is configured to supply an alternating voltage or an alternating current to the dough.

The dough relaxation device may be configured to provide an alternating electromagnetic field that has an amplitude in a range of 0,8 kV/m to 3 kV/m or to provide a voltage between 80 V and 300 V or a current between 0,5 A and 5,2 A.

The dough relaxation device may be configured to apply the alternating electromagnetic field or the voltage or the current to the dough for a period of less than 30 s, preferably of less than 15 s, and more preferably of less than 5 s.

The electrodes may be configured to be in mechanical contact with the dough.

The dough relaxation device may be configured to increase an extensibility of the dough by a value B, wherein B is more than 50 %, preferably more than 75 %, and more preferably more than 90 % of an extensibility decrease A caused by a dough kneading, shaping or dividing device (kneader/shaper/divider) arranged upstream of the dough relaxation device.

The system is configured to produce baked goods containing gluten.

It will be appreciated that the features and attendant advantages of the disclosed system may be realized by the disclosed method and vice versa.

### BRIEF DESCRIPTION OF THE DRAWINGS

The foregoing aspects and many of the attendant advantages will become more readily appreciated as the same becomes better understood by reference to the following detailed description, when taken in conjunction with the accompanying drawings, wherein like reference numerals refer to like parts throughout the various views, unless otherwise specified.
Fig. 1 schematically illustrates components of a system for producing baked goods, according to a first example;
Fig. 2 schematically illustrates components of a system for producing baked goods, according to a second example;
Fig. 3a and Fig. 3b schematically illustrate components of a system for producing baked goods, according to a third example;
Fig. 4 schematically illustrates a dough relaxation device;
Fig. 4a schematically illustrates a modification of the dough relaxation device of Fig. 4;
Fig. 5 shows a flow-chart of a method of reducing the time required for processing dough provided for producing baked goods by speeding-up dough relaxation;
Fig. 6 shows a diagram illustrating the effect of a period of rest on the ductility of the dough;
Fig. 7 shows a diagram illustrating the effect of the method on the ductility of the dough;
Fig. 8 shows a diagram illustrating the resistance of the dough against deformation during a rheological test;
Fig. 9 shows a diagram illustrating the effect of a period of rest on the relaxation halftime of the dough;
Fig. 10 shows a diagram illustrating the effect of the method on the relaxation halftime of the dough; and
Fig. 11 shows a diagram illustrating the effect of the method on the temperature of the dough.

Notably, the drawings are not drawn to scale and unless otherwise indicated, they are merely intended to conceptually illustrate the structures and procedures described herein.

### DETAILED DESCRIPTION

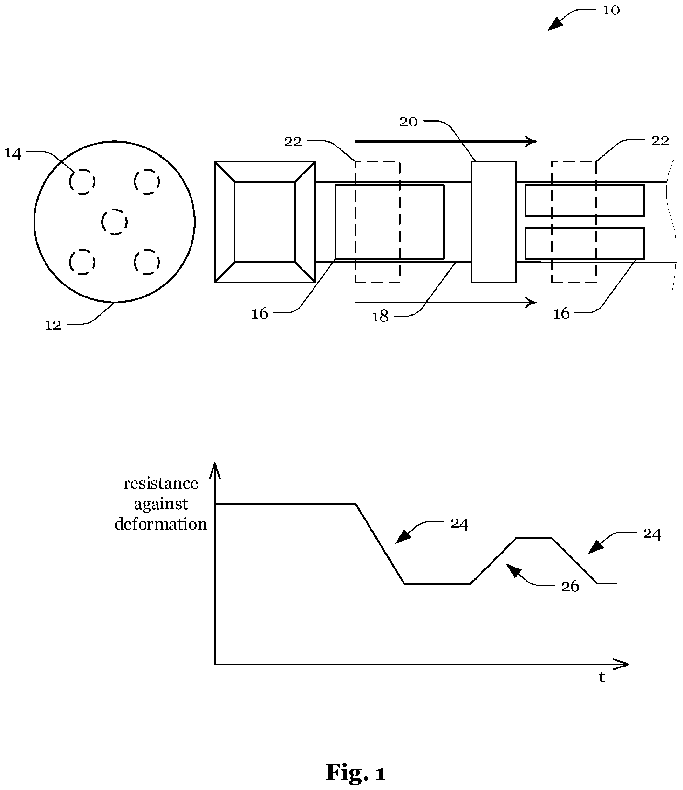

Fig. 1 schematically illustrates components of a system 10 for producing baked goods. The system 10 comprises a kneader 12 with one or more dough hooks 14 for mixing flour (containing gluten), water and other ingredients of the dough 16. After mixing, the dough 16 is removed from the kneader 12 and undergoes one or more shaping and/or dividing steps. As shown in Fig. 1, the dough 16 may be placed on a conveyer 18 that transports the dough 16 to a shaper/divider 20. As mechanical force has been exerted on the dough 16 in the kneader 12, shaping and dividing (including deformation of) the dough 16 may be facilitated by a preceding dough relaxation.

As shown in Fig. 1, dough relaxation may be performed as a continuous process where the dough 16 is passed (at constant speed) through a dough relaxation device 22 which applies an alternating electromagnetic field or supplies a voltage/current to the dough 16. For example, the dough relaxation device 22 may apply an AC voltage in the range of 80 V to 300 V to a dough strand having a width of 0.1 m, wherein the strand is transported at a speed that ensures that the dough 16 is exposed to the alternating electromagnetic field or to the voltage for a defined period of time (e.g., a period in the range of 1-5 s).

**Table 1: Preferable Relaxation Parameters**

| Voltage | 110 V | 140 V | 170 V | 200 V | 230 V | 260 V |
|---|---|---|---|---|---|---|
| Duration | 2-5 s | 2-5 s | 1-5 s | 1-3 s | 1-3 s | 1-2 s |

As illustrated in Fig. 1, applying the alternating electromagnetic field or supplying the voltage to the dough 16 causes a decrease 24 of the resistance of the dough 16 against mechanical deformation, as the dough 16 passes through the dough relaxation device 22. Moreover, applying the alternating electromagnetic field or supplying the voltage to the dough 16 causes an increase in ductility. After having passed the dough 16 through the dough relaxation device 22 the dough 16 may be fed to the shaper/divider 20. As the shaper/divider 20 also exerts mechanical force on the dough 16, it may be necessary to pass the shaped/divided dough 16 through another (or the same) dough relaxation device 22 to (fully or partially) revert the increase 26 in resistance against deformation and the decrease in ductility (induced by the process step of shaping/dividing the dough by the shaper/divider).

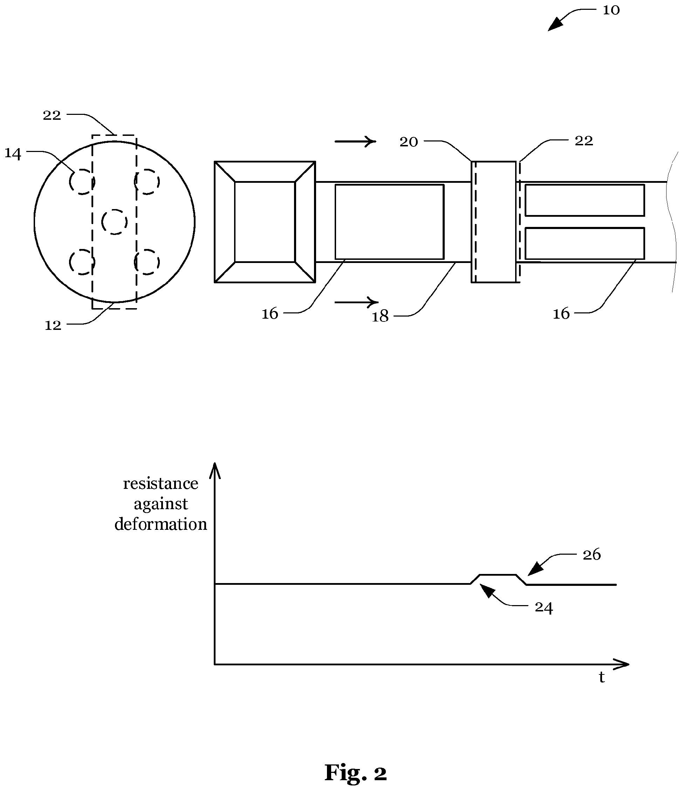

Notably, dough relaxation may not only be performed between steps involving the exertion of mechanical force on the dough 16 (such as kneading, shaping or dividing) but may also be performed during said steps. For example, as shown in Fig. 2, the dough relaxation device 22 may be integrated into the kneader 12 and/or the shaper/divider 20. If the dough relaxation device 22 is integrated into the kneader 12 and/or the shaper/divider 20, the alternating electromagnetic field or the voltage/current may be applied to the dough 16 at recurring intervals (of a set frequency) or in response to a sensed increase in the resistance of the dough 16 against the processing.

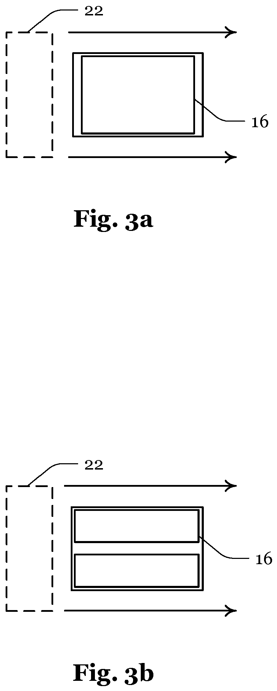

As illustrated in Fig. 3a and Fig. 3b, the dough relaxation device 22 may also be used as a stand-alone device 22. For example, a dough 16 withdrawn from a kneader 12 or a shaper/divider 20 and requiring relaxation may be placed on a support and the dough relaxation device 22 may be moved past the dough 16 while applying an alternating electromagnetic field or supplying a voltage/current to the dough 16. Notably, a relative movement between the dough relaxation device 22 and the dough 16 is not mandatory but may be advantageous in view of keeping the size of the dough relaxation device 22 small and achieving relaxation uniformity.

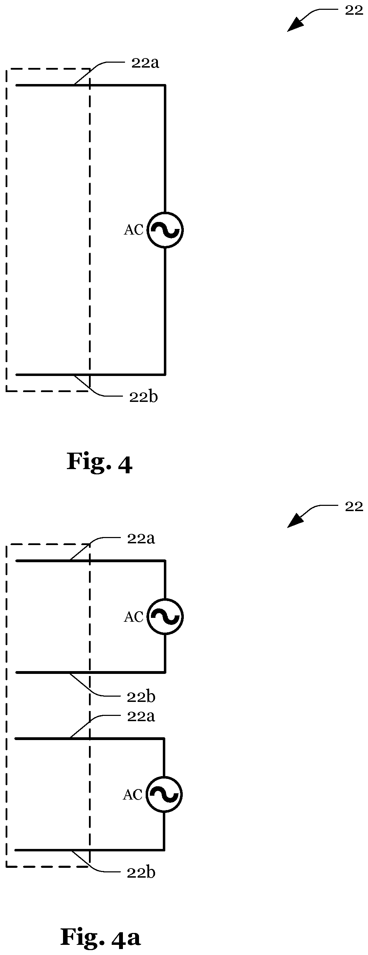

As illustrated in Fig. 4, the dough relaxation device 22 may comprise two electrodes 22a, 22b that are connected to an AC power source (e.g., 50 Hz). The electrodes 22a, 22b may be configured to be in mechanical contact with the dough 16. As the dough 16 may have been divided, the dough relaxation device 22 may also comprise multiple electrode pairs 22a, 22b, as illustrated in Fig. 4a. To avoid sticking, the electrodes 22a, 22b may be made of a metal which is provided with a non-stick coating. Moreover, the dough relaxation device 22 may be provided with a cleaning module that (mechanically) cleans the electrodes 22a, 22b from dough that sticks to the electrodes 22a, 22b.

Notably, limiting the duration for which the alternating electromagnetic field or the voltage/current is applied to the dough 16 may reduce or even avoid sticking such that the duration may be reduced if sticking occurs. For example, the cleaning module may provide a signal indicating whether or to what degree sticking occurs and the dough relaxation device 22 may reduce the duration for which the alternating electromagnetic field or the voltage/current is applied to the dough 16 in response to excessive sticking. In another example, the composition of the dough 16 may be adapted in response to excessive sticking taking place at the electrodes 22a, 22b of the dough relaxation device 22.

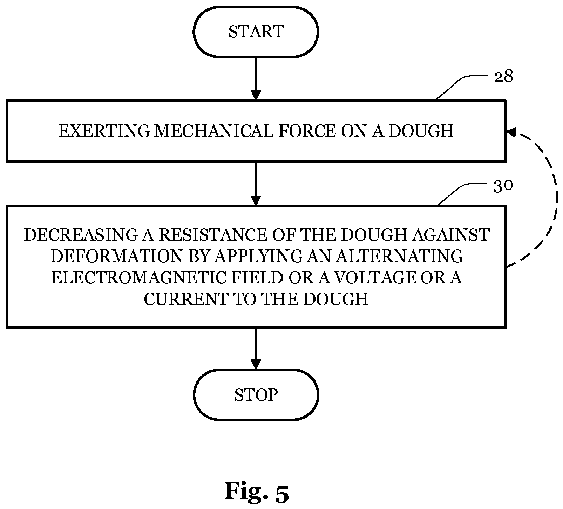

Fig. 5 shows a flow-chart of the process which basically comprises the steps 28, 30 of exerting mechanical force on a dough 16 and applying an alternating electromagnetic field or supplying a voltage/current to the dough 16. As described above, said steps 28, 30 may be performed consecutively but may also be performed concurrently. Moreover, the step 30 of applying an alternating electromagnetic field or supplying a voltage/current to the dough 16 may be interspersed between consecutive steps 28 of exerting mechanical force on the dough 16 to reduce the overall dough processing time by avoiding the need for periods at which the dough 16 is at rest.

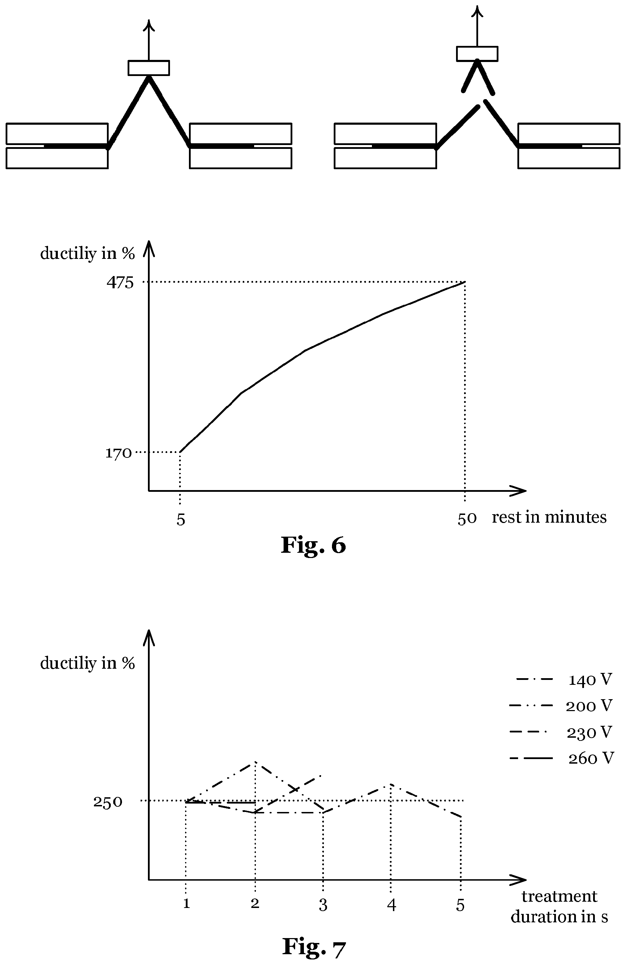

In this regard, Fig. 6 shows a diagram illustrating the effect of a period of rest on the ductility of the dough 16 (i.e. the extensibility of the dough 16 until the dough 16 tears apart, as illustrated in the upper part of Fig. 6). As shown in Fig. 6, the ductility constantly increases with the duration of the rest. As shown in Fig. 7 the same effect as letting the dough 16 rest for about fifteen minutes can be achieved by supplying an alternating voltage to the dough 16 for a couple of seconds.

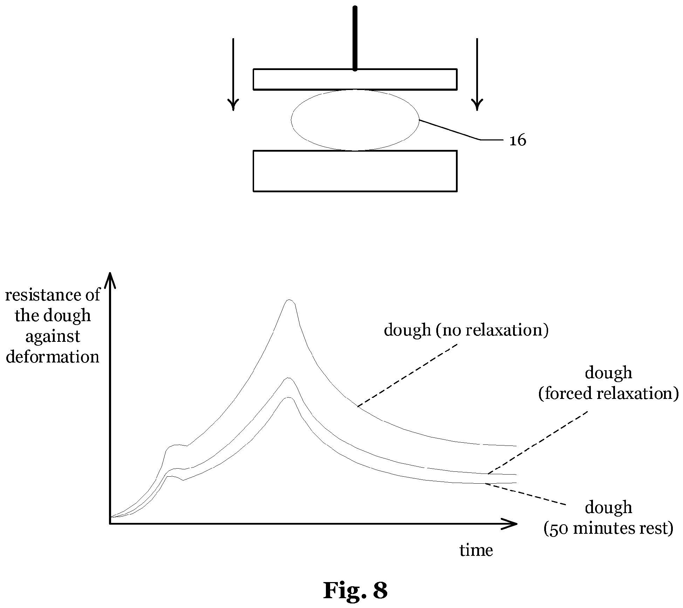

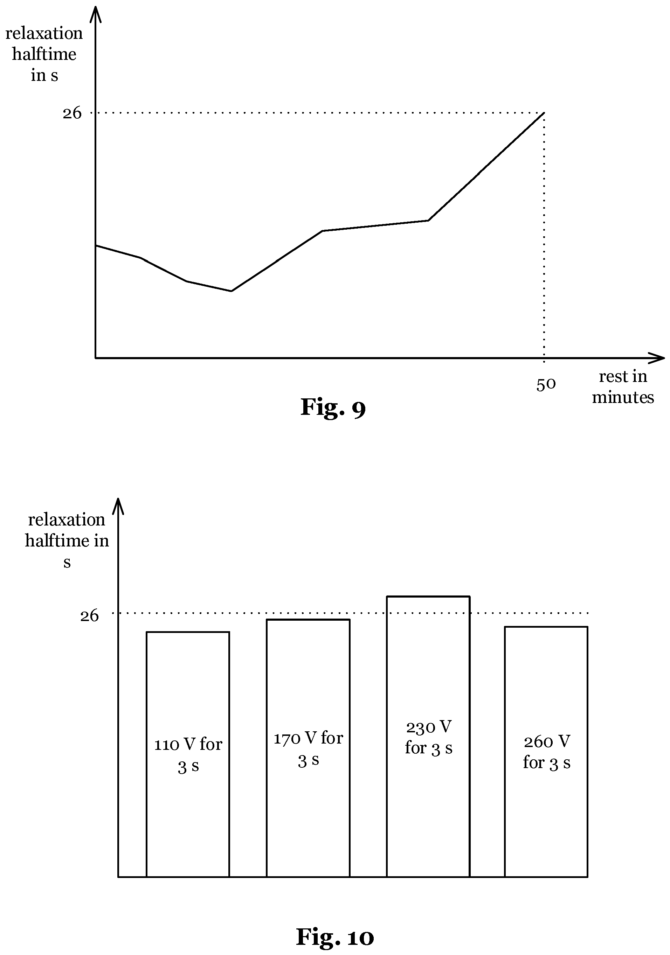

As illustrated in Fig. 8, the resistance of the dough 16 when compressed between two plates at constant speed is substantially the same when comparing a dough 16 that has had a period of rest for about 50 minutes and a dough 16 that has been treated in accordance with the parameters indicated in Table 1. As shown in Fig. 9 an Fig. 10, this also applies to the relaxation halftime which has been measured by shearing the dough 16 at a shear rate of 0.02 s⁻¹ until a strain of 100 % is reached and which is substantially the same when comparing a dough 16 that has had a period of rest for about 50 minutes and a dough 16 that has been treated in accordance with the process of Fig. 5.

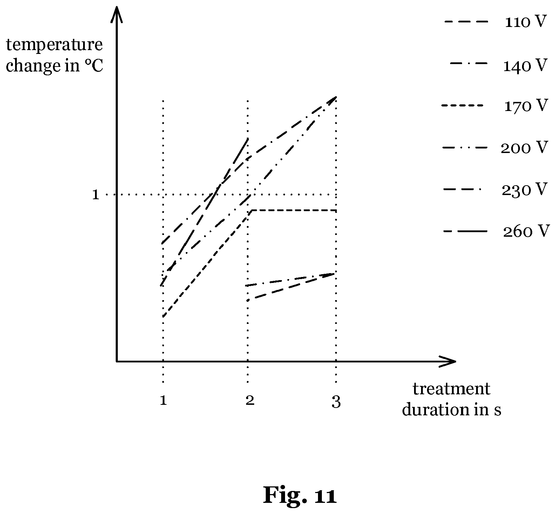

As illustrated in Fig. 11, applying an alternating voltage to a strand of dough 16 with a width of about 0.1 m for a couple of seconds (e.g., less than 5 s) increases the temperature of the dough 16 only by a few degrees Celsius (e.g., less than 2°C) such that no cooling of the dough 16 is required.

Accordingly, treating the dough 16 in accordance with the process shown in Fig. 5 allows achieving substantially the same mechanical properties as letting the dough 16 rest for a considerable amount of time (e.g., 10 minutes or above) and allows to instantly proceed with consecutive processing steps such as, for example, shaping and dividing.

### LIST OF REFERENCE NUMERALS

- 10: system
- 12: kneader
- 14: dough hook
- 16: dough
- 18: conveyor
- 20: shaper/divider
- 22: dough relaxation device
- 22a: electrode
- 22b: electrode
- 24: modulus decrease
- 26: modulus increase
- 28: process step
- 30: process step

## Claims

1. A method of reducing a time required for processing dough (16) provided for producing baked goods by speeding-up dough relaxation, the method comprising:
decreasing (24) a resistance of the dough (16) against deformation after or during a step of exerting mechanical force on the dough (16) by applying (30) an alternating electromagnetic field or by supplying a voltage or a current to the dough (16).

2. The method of claim 1, further comprising:
exerting (28) mechanical force on the dough (16) or baking the dough (16) after applying (30) the alternating electromagnetic field or supplying the voltage or the current to the dough (16).

3. The method of claim 1 or 2, wherein the step of exerting (28) mechanical force on the dough (16) comprises at least one of kneading, shaping and dividing the dough (16).

4. The method of any one of claims 1 to 3, wherein the dough (16) rests less than 10 minutes, preferably less than 5 minutes, and more preferably less than 1 minute between steps of exerting (28) mechanical force on the dough (16) or between exerting (28) mechanical force on the dough (16) and baking.

5. The method of any one of claims 1 to 4, wherein the alternating electromagnetic field has an amplitude in a range of 0.8kV/m to 3 kV/m or wherein the voltage is between 80 V and 300 V or wherein the current is between 0,5 A and 5,2 A.

6. The method of any one of claims 1 to 5, wherein the alternating electromagnetic field or the voltage or the current is applied to the dough (16) for a period of less than 30 s, preferably of less than 15 s, and more preferably of less than 5 s.

7. The method of any one of claims 1 to 6, wherein the alternating electromagnetic field or the voltage or the current is provided by two electrodes (22a, 22b) that are in mechanical contact with the dough (16).

8. The method of any one of claims 1 to 7, wherein the extensibility of the dough (16) is:
decreased by the step of exerting (28) mechanical force on the dough (16) by a value A; and
increased by the step of applying (30) an alternating electromagnetic field or by supplying a voltage or a current to the dough (16) by a value B;
wherein B is more than 50 %, preferably more than 75 %, and more preferably more than 90 % of A.

9. The method of any one of claims 1 to 8, wherein the dough (16) comprises gluten.

10. A system (10) for producing baked goods, the system (10) comprising:
a dough relaxation device (22) having two electrodes (22a, 22b), wherein the dough relaxation device (22) is configured to decrease (26) a resistance of the dough (16) against deformation by applying an alternating electromagnetic field or by supplying a voltage or a current to the dough (16).

11. The system (10) of claim 10, wherein the dough relaxation device (22) is configured to provide an alternating electromagnetic field that has an amplitude in a range of 0,8 kV/m to 3 kV/m or to provide a voltage between 80 V and 300 V or a current between 0,5 A and 5,2 A.

12. The system (10) of claim 10 or 11, wherein the dough relaxation device (22) is configured to apply the alternating electromagnetic field or the voltage or the current to the dough (16) for a period of less than 30 s, preferably of less than 15 s, and more preferably of less than 5 s.

13. The system (10) of any one of claims 10 to 12, wherein the electrodes (22a, 22b) are configured to be in mechanical contact with the dough (16).

14. The system (10) of any one of claims 10 to 13, wherein the dough relaxation device (22) is configured to increase an extensibility of the dough (16) by a value B, wherein B is more than 50 %, preferably more than 75 %, and more preferably more than 90 % of an extensibility decrease A caused by a dough kneading, shaping, or dividing device (12, 20) arranged upstream of the dough relaxation device (22).

15. The system (10) of any one of claims 10 to 14, wherein the system (10) is configured to produce baked goods containing gluten.
